# EUROPEAN PATENT SPECIFICATION

(11) **EP 3 686 082 B1**
(45) Date of publication and mention of the grant of the patent: **28.02.2024**
(21) Application number: 18921295.4
(22) Date of filing: 10.12.2018
(51) Int. Cl.: B61L 27/04, B61L 25/02, B61L 23/00, B60W 30/14, B61L 27/00

(54) **METHOD AND DEVICE CAPABLE OF ACHIEVING INTELLIGENT CONSTANT SPEED AND ENERGY-SAVING DRIVING**
ZUR ERZIELUNG EINER INTELLIGENTEN KONSTANTEN GESCHWINDIGKEIT UND VON ENERGIESPARENDEM FAHREN FÄHIGE VERFAHREN UND VORRICHTUNG
PROCÉDÉ ET DISPOSITIF PERMETTANT D'OBTENIR UNE VITESSE CONSTANTE INTELLIGENTE ET UNE CONDUITE ÉCONOME EN ÉNERGIE

(30) Priority: 29.11.2018 CN 201811440774
(43) Date of publication of application: 29.07.2020
(73) Proprietor: CRRC Changchun Railway Vehicles Co., Ltd., Changchun, Jilin 130000 (CN)
(72) Inventor: HA, Dalei, Changchun, Jilin 130000 (CN); WANG, Lei, Changchun, Jilin 130000 (CN); XING, Xuebin, Changchun, Jilin 130000 (CN); LI, Hailong, Changchun, Jilin 130000 (CN); WANG, Zhi, Changchun, Jilin 130000 (CN)
(74) Representative: Thoma, Michael
(86) International application number: PCT/CN2018/120147
(87) International publication number: WO 2020/107526

(56) References cited:
- CN-A- 103 963 805
- CN-A- 104 787 091
- CN-A- 105 835 914
- CN-A- 106 494 468
- CN-A- 107 972 698
- CN-A- 108 791 367
- CN-A- 108 791 367
- JP-A- 2005 269 764
- JP-A- 2018 184 135
- US-A1- 2017 297 594

## Description

The present application claims the priority to Chinese Patent Application No. 201811440774.0, titled "METHOD AND DEVICE FOR REALIZING INTELLIGENT CONSTANT-SPEED AND ENERGY-SAVING DRIVING ", filed with the China National Intellectual Property Administration, on November 29, 2018.

### FIELD

The present application relates to the technical field of rail transportations, and in particular to a method and a device for realizing intelligent constant-speed and energy-saving driving.

### BACKGROUND

The constant-speed function of the existing electrical multiple units project is mainly classified into two types: one is a constant-speed operation mode, that is, when the electrical multiple units meet a constant-speed condition, the driver sets a target speed, and then relevant control functions are completed by a vehicle-mounted CCU (Central Control Unit). The constant-speed operation mode cannot automatically adjust the target speed according to speed limits of different operation sections, and all adjustments of the speed are manually completed by the driver.

The other is an automatic train operation mode, that is, an ATO mode. Although automatic adjustments of the target speed can be realized in this mode according to speed limits of different operation sections, an additional ATO host and related sensors need to be provided on the train, which has a high manufacturing cost. In the meantime, during the implementation of this mode, since a certain given speed value is automatically tracked in this mode according to a route situation and a signal situation in front of the train, if speed deviation occurs, the train will be hauled/braked immediately to correct the speed deviation, which results in that route conditions cannot be reasonably utilized, and the energy consumption of the train is increased.

For example, in a case that the given speed value is 250km/h, the speed of the train is corrected in real time by traction/braking to keep the train at the speed of 250km/h. In a case that there is a downhill ahead, the train still travels at the speed of 250km/h, which results in that the train cannot effectively utilize the potential energy when going downhill to reduce the energy consumption.
Chinese patent application No.108791367A provides an energy-saving manipulation method for a train. The energy-saving manipulation method comprises the steps that the train is pulled to be at a certain speed with the maximum traction force at the starting stage, and then according to information such as the operating speed, line speed limiting, the ramp situation and operating resistance of the train, coasting and constant-speed operating strategies are alternately selected till the train is accurately parked at a target parking point of a station through the maximum braking working condition before pulling in; and on the basis of reading-in of train parameters, line data and the planned operating time, the switching position of a working condition sequence is optimized through a Brute-Force algorithm, and the most energy-saving train manipulation scheme is obtained by traversing the solution space. According to the energy-saving manipulation method, ramp potential energy can be fully utilized to provide kinetic energy for the train, the duration of the traction working condition is reduced, and traction energy consumption of the train is reduced.
Japanese patent application No.2005269764A provides a high-speed operation assisting apparatus. The high-speed operation assisting apparatus has a microcomputer, previously calculates an arrival predicting time to a target arrival point in response to travel kilometers and a train speed during powering-off traveling, and stores it in a traveling pattern memory, controls the constant speed operation of a train by speed limit information from a train security apparatus, information on travel kilometers from a travel kilometer manager and a speed signal from a speed power generator based on a control start instruction from a control start operating section, refers to the traveling pattern memory, calculates an optimal powering-off start point, and improves the accuracy of a scheduled operation while making the train travel in powering-off from the powering-off start point and saving energy.

### SUMMARY

In order to solve the above technical problem, a method and a device for realizing intelligent constant-speed and energy-saving driving are provided according to embodiments of the present application. The technical solutions are as follows.

A method for realizing intelligent constant-speed and energy-saving driving is applied to a central control unit, which includes:
obtaining control information of a train when the train enters an intelligent constant-speed mode, wherein the control information includes route information and train information; and
generating an automatic driving and energy-saving control strategy according to the control information on the basis of meeting a running time of normal operation of the train, and controlling operation of the train according to the automatic driving and energy-saving control strategy.

According to the invention, the generating an automatic driving and energy-saving control strategy according to the control information on the basis of meeting a running time of normal operation of the train includes:
generating a first automatic driving and energy-saving control strategy, if the route information indicates that the train is running on a gentle route, wherein the first automatic driving and energy-saving control strategy is to control the speed of the train to rise from a given speed to a first speed by using maximum-power traction at a starting portion of the route, and to reduce the speed of the train from the first speed to a second speed through an idle running condition in remainder of the route, and to reduce the speed of the train from the second speed to zero by braking deceleration, wherein the first speed is less than a speed limit threshold, and the given speed is a speed when the train enters the intelligent constant-speed mode; and
generating a second automatic driving and energy-saving control strategy, if the route information indicates that the train is running on a complex route, wherein the complex route includes an uphill route and/or a downhill route, and in a case that the complex route includes the uphill route, the second automatic driving and energy-saving control strategy is to start speeding up the train by using the maximum-power traction within a preset distance before the train enters the uphill route; and in a case that the complex route includes the downhill route, the second automatic driving and energy-saving control strategy is to control the speed of the train to drop by using the idle running condition within a preset distance before the train enters the downhill route.

Preferably, the reducing the speed of the train from the second speed to zero by braking deceleration includes:
reducing the speed of the train from the second speed to zero by means of electric braking.

Preferably, the controlling the speed of the train to rise from a given speed to a first speed by using maximum-power traction at a starting portion of the route includes:
planning a speed-time curve of the train according to the control information;
calculating resistance of the gentle route in real time to obtain a calculation result of the route resistance;
calculating a real-time output power according to the speed-time curve and the calculation result of the route resistance;
performing a matching calculation for power units according to the real-time output power to obtain a calculation result of power-matching; and
obtaining a power-switching instruction based on the calculation result of power-matching to control the power units to be turned on or off according to the calculation result of power-matching, wherein activation or shutdown of the power units allows the speed of the train to rise from the given speed to the first speed.

Preferably, the method further includes:
determining whether the train meets a condition for entering the intelligent constant-speed mode;
determining whether an instruction of entering the intelligent constant-speed mode is received, if the condition for entering the intelligent constant-speed mode is met; and
performing the obtaining control information of the train, if the instruction of entering the intelligent constant-speed mode is received.

A device for realizing intelligent constant-speed and energy-saving driving is applied to a central control unit, which includes:
an obtaining unit, configured to obtain control information of a train when the train enters an intelligent constant-speed mode, wherein the control information includes route information and train information; and
a processing unit, configured to generate an automatic driving and energy-saving control strategy according to the control information on the basis of meeting a running time of normal operation of the train, and to control operation of the train according to the automatic driving and energy-saving control strategy.

According to the invention, the processing unit is specifically configured to:
generate a first automatic driving and energy-saving control strategy, if the route information indicates that the train is running on a gentle route, wherein the first automatic driving and energy-saving control strategy is to control the speed of the train to rise from a given speed to a first speed by using maximum-power traction at a starting portion of the route, and to reduce the speed of the train from the first speed to a second speed through an idle running condition in remainder of the route, and to reduce the speed of the train from the second speed to zero by braking deceleration, wherein the first speed is less than a speed limit threshold, and the given speed is a speed when the train enters the intelligent constant-speed mode; and
generate a second automatic driving and energy-saving control strategy, if the route information indicates that the train is running on a complex route, wherein the complex route includes an uphill route and/or a downhill route, and in a case that the complex route includes the uphill route, the second automatic driving and energy-saving control strategy is to start speeding up the train by using the maximum-power traction within a preset distance before the train enters the uphill route; and in a case that the complex route includes the downhill route, the second automatic driving and energy-saving control strategy is to control the speed of the train to drop by using the idle running condition within a preset distance before the train enters the downhill route.

Preferably, the reducing the speed of the train from the second speed to zero by braking deceleration in the processing unit includes:
reducing the speed of the train from the second speed to zero by means of electric braking.

Preferably, the processing unit is specifically configured to:
plan a speed-time curve of the train according to the control information;
calculate resistance of the gentle route in real time to obtain a calculation result of the route resistance;
calculate a real-time output power according to the speed-time curve and the calculation result of the route resistance;
perform a matching calculation for power units according to the real-time output power to obtain a calculation result of power-matching; and
obtain a power-switching instruction based on the calculation result of power-matching to control the power units to be turned on or off according to the calculation result of power-matching, wherein activation or shutdown of the power units allows the speed of the train to rise from the given speed to the first speed.

Preferably, the device further includes:
a first determining unit, configured to determine whether the train meets a condition for entering the intelligent constant-speed mode; and
a second determining unit, configured to determine whether an instruction of entering the intelligent constant-speed mode is received, if the condition for entering the intelligent constant-speed mode is met, wherein the obtaining control information of the train in the obtaining unit is performed, if the instruction of entering the intelligent constant-speed mode is received.

According to the technical solutions provided by the embodiments of the present application, when the train enters the intelligent constant-speed operation mode, the control information of the trains is obtained, and an automatic driving and energy-saving control strategy according to the control information on the basis of meeting a running time of normal operation of the train is generated, thereby controlling operation of the train according to the automatic driving and energy-saving control strategy. Since the automatic driving and energy-saving control strategy is generated according to the route information, the embodiments of the present application can reduce the energy consumption of the train, compared with the constant-speed operation in the conventional technology.

### BRIEF DESCRIPTION OF THE DRAWINGS

Figure 1 is a schematic flowchart of a method for realizing intelligent constant-speed and energy-saving driving according to an embodiment of the present application;
Figure 2 is another schematic flowchart of the method for realizing intelligent constant-speed and energy-saving driving according to an embodiment of the present application; and
Figure 3 is a schematic structural diagram of a device for realizing intelligent constant-speed and energy-saving driving according to an embodiment of the present application.

### DETAILED DESCRIPTION OF EMBODIMENTS

The technical solutions according to the embodiments of the present application will be described clearly and completely as follows in conjunction with the drawings in the embodiments of the present application. It is apparent that the described embodiments are only a part of the embodiments according to the present application, rather than all the embodiments. Based on the embodiments of the present application, all other embodiments, made by those skilled in the art without any creative efforts, fall into the scope of the present application.

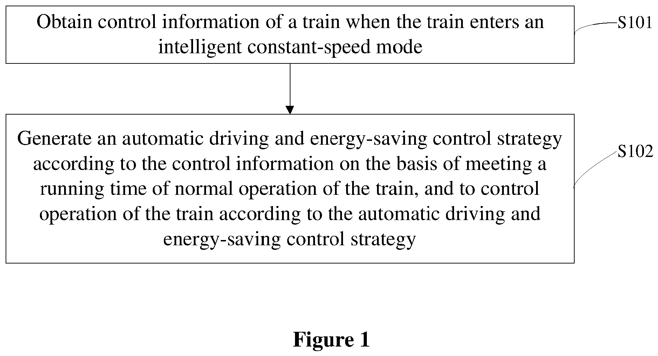

Referring to Figure 1, Figure 1 is a schematic flowchart of a method for realizing intelligent constant-speed and energy-saving driving according to an embodiment of the present application, the method is applied to a central control unit, and the method includes:

Step S 101, obtaining control information of a train when the train enters an intelligent constant-speed mode.

The control information includes route information and train information.

In practical applications, the control information may be information of timetables, running maps, train speed, ramps, curves, stations, roads, bridges, tunnels, speed limit, train length, unit mass, load, auxiliary power, traction\braking force characteristics, resistance characteristics, and so on.

Preferably, before step S101, the method further includes:
determining whether the train meets a condition for entering the intelligent constant-speed mode;
determining whether an instruction of entering the intelligent constant-speed mode is received, if the condition for entering the intelligent constant-speed mode is met; and
performing the obtaining control information of the train, if the instruction of entering the intelligent constant-speed mode is received.

In the embodiments of the present application, if the train meets the condition for entering the intelligent constant-speed mode, the driver may trigger a specific button to enter the mode.

Step S102, generating an automatic driving and energy-saving control strategy according to the control information on the basis of meeting a running time of normal operation of the train, and controlling operation of the train according to the automatic driving and energy-saving control strategy.

The step of generating an automatic driving and energy-saving control strategy according to the control information on the basis of meeting a running time of normal operation of the train includes:
generating a first automatic driving and energy-saving control strategy, if the route information indicates that the train is running on a gentle route, wherein the first automatic driving and energy-saving control strategy is to control the speed of the train to rise from a given speed to a first speed by using maximum-power traction at a starting portion of the route, and to reduce the speed of the train from the first speed to a second speed through an idle running condition in remainder of the route, and to reduce the speed of the train from the second speed to zero by braking deceleration, wherein the first speed is less than a speed limit threshold, and the given speed is a speed when the train enters the intelligent constant-speed mode; and
generating a second automatic driving and energy-saving control strategy, if the route information indicates that the train is running on a complex route, wherein the complex route includes an uphill route and/or a downhill route, and in a case that the complex route includes the uphill route, the second automatic driving and energy-saving control strategy is to start speeding up the train by using the maximum-power traction within a preset distance before the train enters the uphill route; and in a case that the complex route includes the downhill route, the second automatic driving and energy-saving control strategy is to control the speed of the train to drop by using the idle running condition within a preset distance before the train enters the downhill route.

In the present embodiment, the CCU controls the train to enter the intelligent constant-speed mode. If the forward route is uphill, the train is accelerated in advance by the maximum-power traction, or if the forward route is downhill, the train is decelerated in advance by the idle running condition. Since the train is decelerated before going downhill, the potential energy of the train when going downhill is converted into the kinetic energy of the train, so that the train is speeded up on the basis of the first speed, thereby reducing the energy consumption of the train while ensuring the running time of the train. In addition, speeding up the train in advance on the basis of the given speed before going uphill also reduces the energy consumption of the train, compared with speeding up the train after going uphill. Finally, if the train is running on a gentle route, the train is accelerated only at the starting portion of the route, and then is driven by the idle running condition until the train is decelerated at a tail end of the route, which reduces the energy consumption of the train, compared with that the train keeps travelling at a constant speed in the conventional technology.

In another embodiment of the present application, the speed of the train is reduced from the second speed to zero by braking deceleration. Specifically, the speed of the train may be decelerated from the second speed to zero by means of electric braking. The electric braking can convert the kinetic energy of the train into electric energy, so that the electric braking can also reduce the energy consumption of the train, compared with air braking.

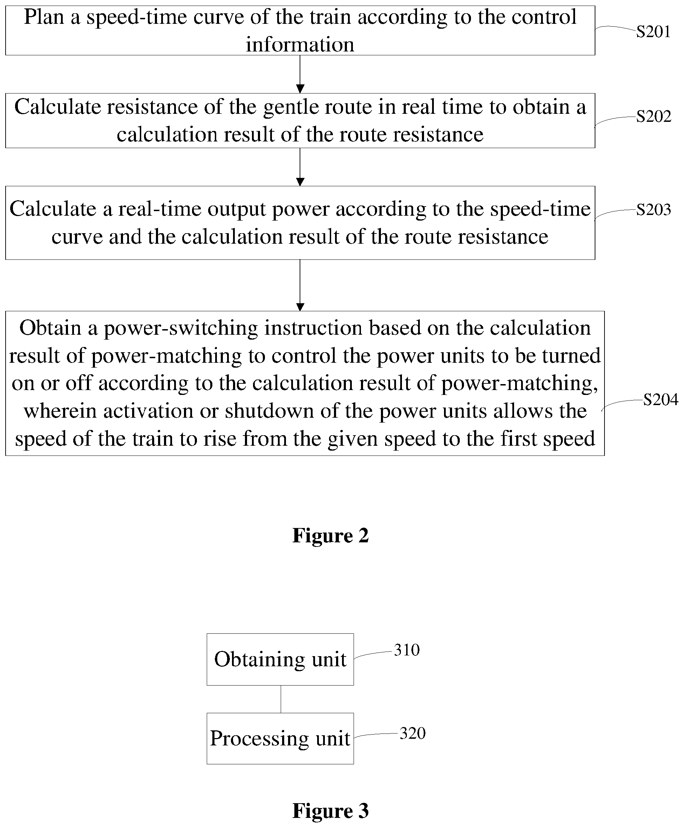

In another embodiment of the present application, the controlling the speed of the train to rise from a given speed to a first speed by using maximum-power traction at a starting portion of the route, as show in Figure 2, includes:
Step S201, planning a speed-time curve of the train according to the control information;
Step S 102, calculating resistance of the gentle route in real time to obtain a calculation result of the route resistance;
Step S203, calculating a real-time output power according to the speed-time curve and the calculation result of the route resistance;
Step S204, performing a matching calculation for power units according to the real-time output power to obtain a calculation result of power-matching; and
Step S205, obtaining a power-switching instruction based on the calculation result of power-matching to control the power units to be turned on or off according to the calculation result of power-matching, wherein activation or shutdown of the power units allows the speed of the train to rise from the given speed to the first speed.

In another embodiment of the present application, the step of generating an automatic driving and energy-saving control strategy according to the control information on the basis of meeting a running time of normal operation of the train may include:
using maximum-power traction to ensure that the train is accelerated quickly, if the speed of the train needs to rise; and
using the idle running condition, if the speed of the train needs to decrease; or using maximum-power braking, if the idle running condition cannot meet deceleration requirements of the train.

According to the technical solutions provided by the embodiments of the present application, when the train enters the intelligent constant-speed operation mode, the control information of the trains is obtained, and an automatic driving and energy-saving control strategy according to the control information on the basis of meeting a running time of normal operation of the train is generated, thereby controlling operation of the train according to the automatic driving and energy-saving control strategy. Since the automatic driving and energy-saving control strategy is generated according to the route information, the embodiments of the present application can reduce the energy consumption of the train, compared with the constant-speed operation in the conventional technology.

Referring to Figure 3, Figure 3 is a schematic structural diagram of a device for realizing intelligent constant-speed and energy-saving driving according to an embodiment of the present application. Working process of each module in the schematic structural diagram refers to the execution process of the method in the embodiment corresponding to Figure 1. The device includes:
an obtaining unit 310, configured to obtain control information of a train when the train enters an intelligent constant-speed operation mode, wherein the control information includes route information and train information; and
a processing unit 320, configured to generate an automatic driving and energy-saving control strategy according to the control information on the basis of meeting a running time of normal operation of the train, and to control operation of the train according to the automatic driving and energy-saving control strategy.

According to the technical solutions provided by the embodiments of the present application, when the train enters the intelligent constant-speed operation mode, the control information of the trains is obtained, and an automatic driving and energy-saving control strategy according to the control information on the basis of meeting a running time of normal operation of the train is generated, thereby controlling operation of the train according to the automatic driving and energy-saving control strategy. Since the automatic driving and energy-saving control strategy is generated according to the route information, the embodiments of the present application can reduce the energy consumption of the train, compared with the constant-speed operation in the conventional technology.

In another embodiment of the present application, it is preferred that the processing unit is specifically configured to:
generate a first automatic driving and energy-saving control strategy, if the route information indicates that the train is running on a gentle route, wherein the first automatic driving and energy-saving control strategy is to control the speed of the train to rise from a given speed to a first speed by using maximum-power traction at a starting portion of the route, and to reduce the speed of the train from the first speed to a second speed through an idle running condition in remainder of the route, and to reduce the speed of the train from the second speed to zero by braking deceleration, wherein the first speed is less than a speed limit threshold, and the given speed is a speed when the train enters the intelligent constant-speed mode; and
generate a second automatic driving and energy-saving control strategy, if the route information indicates that the train is running on a complex route, wherein the complex route includes an uphill route and/or a downhill route, and in a case that the complex route includes the uphill route, the second automatic driving and energy-saving control strategy is to start speeding up the train by using the maximum-power traction within a preset distance before the train enters the uphill route; and in a case that the complex route includes the downhill route, the second automatic driving and energy-saving control strategy is to control the speed of the train to drop by using the idle running condition within a preset distance before the train enters the downhill route.

In another embodiment of the present application, it is preferred that the reducing the speed of the train from the second speed to zero by braking deceleration in the processing unit includes:
reducing the speed of the train from the second speed to zero by means of electric braking.

In another embodiment of the present application, it is preferred that the processing unit is specifically configured to:
plan a speed-time curve of the train according to the control information;
calculate resistance of the gentle route in real time to obtain a calculation result of the route resistance;
calculate a real-time output power according to the speed-time curve and the calculation result of the route resistance;
perform a matching calculation for power units according to the real-time output power to obtain a calculation result of power-matching; and
obtain a power-switching instruction based on the calculation result of power-matching to control the power units to be turned on or off according to the calculation result of power-matching, wherein activation or shutdown of the power units allows the speed of the train to rise from the given speed to the first speed.

In another embodiment of the present application, it is preferred that the device further includes:
a first determining unit, configured to determine whether the train meets a condition for entering the intelligent constant-speed mode; and
a second determining unit, configured to determine whether an instruction of entering the intelligent constant-speed mode is received, if the condition for entering the intelligent constant-speed mode is met, wherein the obtaining control information of the train in the obtaining unit is performed, if the instruction of entering the intelligent constant-speed mode is received.

In the specification, claims, and accompanying drawings of the present application, the terms "first", "second", "third", "fourth", and the like (if existing) are intended to distinguish between similar objects rather than describe a specific order. It should be understood that, data used in this way can be interchanged in an appropriate case, so that the embodiments of the present application that are described herein, for example, can be implemented in a sequence other than those sequences illustrated or described herein. In addition, the terms "include" and "have" and any variations thereof are intended to cover non-exclusive inclusions. For example, a process, a method, a system, a product or a device that includes a series of steps or units is not limited to those clearly listed steps or units, and may instead include other steps or units not explicitly listed or inherent to the process, method, product or device.

Since the device or system embodiment corresponds to the method embodiment, reference may be made to the method embodiment for the relevant parts. The device or system embodiment described above is merely illustrative. The units described as separate components may be or not be separated physically. The components shown as units may be or not be physical units, i.e., the units may be located at a same place or may be distributed onto multiple network units. A part or all of the modules may be selected based on actual needs to implement the solution according to the embodiment. Those skilled in the art may understand and implement the present application without creative work.

In the embodiments according to the present application, it should be understood that the disclosed system, device and method may be implemented in other ways without departing from the spirit and scope of the present application. The present embodiments are only exemplary examples and should not be construed as a limitation, and the specific contents given should not limit the purpose of the present application. For example, the units or sub-units are merely divided according to a logic function, and the units may be divided in other way in practice. For example, multiple units or sub-units may be combined. Moreover, the units are or parts may be combined or integrated into another system, or some features may be omitted or not performed.

In addition, the described system, device, and method, as well as schematic diagrams of different embodiments, can be combined or integrated with other systems, modules, technologies, or methods without departing from the scope of the present application. In addition, the coupling, direct coupling or communication connection between components which are shown or discussed may be indirect coupling or communication connection via some interfaces, devices or units, which may be electrical, mechanical, or in other form.

## Claims

1. A method for realizing intelligent constant-speed and energy-saving driving, wherein the method is applied to a central control unit, and comprises:
obtaining control information of a train when the train enters an intelligent constant-speed mode (5101), wherein the control information comprises route information and train information; and
generating an automatic driving and energy-saving control strategy according to the control information while meeting a running time of normal operation of the train, and controlling operation of the train according to the automatic driving and energy-saving control strategy (5102), and the method is **characterized in that**,
the generating an automatic driving and energy-saving control strategy according to the control information while meeting a running time of normal operation of the train comprises:
generating a first automatic driving and energy-saving control strategy, if the route information indicates that the train is running on a gentle route, wherein the first automatic driving and energy-saving control strategy is to control a speed of the train to rise from a given speed to a first speed by using maximum-power traction at a starting portion of the route, and to reduce the speed of the train from the first speed to a second speed through an idle running condition in remainder of the route, and to reduce the speed of the train from the second speed to zero by braking deceleration, wherein the first speed is less than a speed limit threshold, and the given speed is a speed when the train enters the intelligent constant-speed mode; and
generating a second automatic driving and energy-saving control strategy, if the route information indicates that the train is running on a complex route, wherein the complex route comprises an uphill route and/or a downhill route, and in a case that the complex route comprises the uphill route, the second automatic driving and energy-saving control strategy is to start speeding up the train by using the maximum-power traction within a preset distance before the train enters the uphill route; and in a case that the complex route comprises the downhill route, the second automatic driving and energy-saving control strategy is to control the speed of the train to drop by using the idle running condition within a preset distance before the train enters the downhill route.

2. The method according to claim 1, wherein the reducing the speed of the train from the second speed to zero by braking deceleration comprises:
reducing the speed of the train from the second speed to zero by means of electric braking.

3. The method according to claim 1, wherein the controlling the speed of the train to rise from a given speed to a first speed by using maximum-power traction at a starting portion of the route comprises:
planning a speed-time curve of the train according to the control information;
calculating resistance of the gentle route in real time to obtain a calculation result of the route resistance;
calculating a real-time output power according to the speed-time curve and the calculation result of the route resistance;
performing a matching calculation for power units according to the real-time output power to obtain a calculation result of power-matching; and
obtaining a power-switching instruction based on the calculation result of power-matching to control the power units to be turned on or off according to the calculation result of power-matching, wherein activation or shutdown of the power units allows the speed of the train to rise from the given speed to the first speed.

4. The method according to claim 1, further comprising:
determining whether the train meets a condition for entering the intelligent constant-speed mode;
determining whether an instruction of entering the intelligent constant-speed mode is received, if the condition for entering the intelligent constant-speed mode is met; and
performing the obtaining control information of the train, if the instruction of entering the intelligent constant-speed mode is received.

5. A device for realizing intelligent constant-speed and energy-saving driving, wherein the device is applied to a central control unit, and comprises:
an obtaining unit (310), configured to obtain control information of a train when the train enters an intelligent constant-speed mode, wherein the control information comprises route information and train information; and
a processing unit (320), configured to generate an automatic driving and energy-saving control strategy according to the control information on the basis of meeting a running time of normal operation of the train, and to control operation of the train according to the automatic driving and energy-saving control strategy, and the device is **characterized in that**
the processing unit (320) is configured to:
generate a first automatic driving and energy-saving control strategy, if the route information indicates that the train is running on a gentle route, wherein the first automatic driving and energy-saving control strategy is to control a speed of the train to rise from a given speed to a first speed by using maximum-power traction at a starting portion of the route, and to reduce the speed of the train from the first speed to a second speed through an idle running condition in remainder of the route, and to reduce the speed of the train from the second speed to zero by braking deceleration, wherein the first speed is less than a speed limit threshold, and the given speed is a speed when the train enters the intelligent constant-speed mode; and
generate a second automatic driving and energy-saving control strategy, if the route information indicates that the train is running on a complex route, wherein the complex route comprises an uphill route and/or a downhill route, and in a case that the complex route comprises the uphill route, the second automatic driving and energy-saving control strategy is to start speeding up the train by using the maximum-power traction within a preset distance before the train enters the uphill route; and in a case that the complex route comprises the downhill route, the second automatic driving and energy-saving control strategy is to control the speed of the train to drop by using the idle running condition within a preset distance before the train enters the downhill route.

6. The device according to claim 5, wherein the reducing the speed of the train from the second speed to zero by braking deceleration in the processing unit (320) comprises:
reducing the speed of the train from the second speed to zero by means of electric braking.

7. The device according to claim 5, wherein the processing unit (320) is configured to:
plan a speed-time curve of the train according to the control information;
calculate resistance of the gentle route in real time to obtain a calculation result of the route resistance;
calculate a real-time output power according to the speed-time curve and the calculation result of the route resistance;
perform a matching calculation for power units according to the real-time output power to obtain a calculation result of power-matching; and
obtain a power-switching instruction based on the calculation result of power-matching to control the power units to be turned on or off according to the calculation result of power-matching, wherein activation or shutdown of the power units allows the speed of the train to rise from the given speed to the first speed.

8. The device according to claim 5, further comprising:
a first determining unit, configured to determine whether the train meets a condition for entering the intelligent constant-speed mode; and
a second determining unit, configured to determine whether an instruction of entering the intelligent constant-speed mode is received, if the condition for entering the intelligent constant-speed mode is met, wherein the obtaining control information of the train in the obtaining unit (310) is performed, if the instruction of entering the intelligent constant-speed mode is received.

## Patentansprüche

1. Verfahren zur Realisierung eines intelligenten, energiesparenden Fahrens bei einer konstanten Geschwindigkeit, wobei das Verfahren auf eine zentrale Steuerung angewandt wird und umfasst:
Erhalten von Steuerinformationen eines Zuges, wenn der Zug in einen intelligenten Konstantgeschwindigkeitsmodus (S101) wechselt,
wobei die Steuerinformationen Streckeninformationen sowie Zuginformationen umfassen, und
Erzeugen einer automatischen Fahr- und Energiesparsteuerstrategie in Abhängigkeit von den Steuerinformationen bei Einhalten einer Fahrzeit bei einem normalen Betrieb des Zuges und Steuerung des Zugbetriebs in Abhängigkeit von der automatischen Fahr- und Energiesparsteuerstrategie (S102), wobei das Verfahren **dadurch gekennzeichnet** wird, dass
das Erzeugen einer automatischen Fahr- und Energiesparsteuerstrategie in Abhängigkeit von den Steuerinformationen beim Einhalten einer Fahrzeit bei einem normalen Betrieb des Zuges umfasst:
Erzeugen einer ersten automatischen Fahr- und Energiesparsteuerstrategie, wenn die Streckeninformationen angeben, dass der Zug auf einer sanften Strecke fährt, wobei die erste automatische Fahr- und Energiesparsteuerstrategie die Geschwindigkeit des Zuges ansteuern soll, mittels einer Zugkraft bei maximaler Leistung von einer vorgegebenen Geschwindigkeit des Zuges an einem Anfangsabschnitt der Strecke auf eine erste Geschwindigkeit anzusteigen und über eine Leerlaufbedingung über die restliche Strecke die Geschwindigkeit des Zuges von der ersten Geschwindigkeit auf eine zweite Geschwindigkeit zu reduzieren sowie über eine Abbremsung die Geschwindigkeit des Zuges von der zweiten Geschwindigkeit auf null zu reduzieren, wobei die erste Geschwindigkeit geringer als eine Geschwindigkeitsbegrenzungsschwelle ist und die vorgegebene Geschwindigkeit die Geschwindigkeit beim Wechseln des Zuges in den intelligenten Konstantgeschwindigkeitsmodus ist, und
Erzeugen einer zweiten automatischen Fahr und Energiesparsteuerstrategie, wenn die Streckeninformationen angeben, dass der Zug auf einer schwierigen Strecke fährt, wobei die schwierige Strecke eine Strecke bergauf bzw. bergab umfasst, und im Falle, dass die schwierige Strecke die Strecke bergauf umfasst, die zweite automatische Fahr- und Energiesparsteuerstrategie darin besteht, die Beschleunigung des Zuges mittels der Zugkraft bei maximaler Leistung innerhalb eines vorbestimmten Fahrwegs, bevor der Zug die Strecke bergauf beginnt, zu starten, und im Falle, dass die schwierige Strecke die Strecke bergab umfasst, die zweite automatische Fahr- und Energiesparsteuerstrategie darin besteht, die Geschwindigkeit des Zuges so anzusteuern, dass sie mittels der Leerlaufbedingung innerhalb eines vorbestimmten Fahrweges, bevor der Zug auf die Strecke bergab übergeht, fällt.

2. Verfahren nach Anspruch 1, wobei die Reduzierung der Geschwindigkeit des Zuges von der zweiten Geschwindigkeit auf null mittels Abbremsung umfasst:
Reduzierung der Geschwindigkeit des Zuges von der zweiten Geschwindigkeit auf null mittels elektrischer Abbremsung.

3. Verfahren nach Anspruch 1, wobei die Ansteuerung der Geschwindigkeit des Zuges, sodass sie mittels einer Zugkraft bei maximaler Leistung von einer vorgegebenen Geschwindigkeit auf eine erste Geschwindigkeit an einem ersten Abschnitt der Fahrstrecke ansteigt, umfasst:
Planen eines Geschwindigkeits-Zeitverlaufs des Zuges in Abhängigkeit von den Steuerinformationen,
Berechnen des Widerstands der sanften Strecke in Echtzeit zum Erhalten eines Berechnungsergebnisses bezüglich des Streckenwiderstands,
Berechnen einer Echtzeit-Ausgangsleistung in Abhängigkeit von dem Geschwindigkeits-Zeitverlauf und dem Berechnungsergebnis des Streckenwiderstands,
Durchführen einer entsprechenden Berechnung für Leistungseinheiten in Abhängigkeit von der Echtzeit-Ausgangsleistung zum Erhalten eines Berechnungsergebnisses der Leistungsentsprechung und
Erhalten einer Leistungsschaltanweisung auf der Basis des Berechnungsergebnisses der Leistungsentsprechung, um die Leistungseinheiten anzusteuern, in Abhängigkeit von dem Berechnungsergebnis der Leistungsentsprechung ein- bzw. auszuschalten, wobei die Aktivierung bzw. Abschaltung der Leistungseinheiten es ermöglicht, dass die Geschwindigkeit des Zuges von der vorgegebenen Geschwindigkeit auf die erste Geschwindigkeit ansteigt.

4. Verfahren nach Anspruch 1, weiterhin umfassend:
Bestimmen, ob der Zug eine Bedingung zum Wechseln in den intelligenten Konstantgeschwindigkeitsmoduus erfüllt,
Bestimmen, ob eine Anweisung zum Wechsel in den intelligenten Konstantgeschwindigkeitsmodus empfangen wird, falls die Bedingung zum Wechseln in den intelligenten Konstantgeschwindigkeitsmodus erfüllt wird und
Durchführen des Beschaffens der Steuerinformationen des Zuges, wenn die Anweisung zum Wechseln in den intelligenten Konstantgeschwindigkeitsmodus empfangen wird.

5. Vorrichtung zur Realisierung eines intelligenten, energiesparenden Fahrens bei einer konstanten Geschwindigkeit, wobei die Vorrichtung auf eine zentrale Steuerung angewandt wird und umfasst:
eine Beschaffungseinheit (310), die ausgebildet ist, Steuerinformationen bezüglich eines Zuges zu beschaffen, wenn der Zug in einen intelligenten Konstantgeschwindigkeitsmodus wechselt, wobei die Steuerinformationen Streckeninformationen sowie Zuginformationen umfassen, und
eine Recheneinheit (320), die zum Erzeugen einer automatischen Fahr- und Energiesparsteuerstrategie in Abhängigkeit von den Steuerinformationen auf der Basis von einem Einhalten einer Fahrzeit bei einem normalen Betrieb des Zuges und zur Steuerung des Zugbetriebs in Abhängigkeit von der automatischen Fahr- und Energiesparsteuerstrategie ausgebildet ist, und wobei die Vorrichtung **dadurch gekennzeichnet** wird, dass
die Recheneinheit (320) ausgebildet ist,
zum Erzeugen einer ersten automatischen Fahr- und Energiesparsteuerstrategie, wenn die Streckeninformationen angeben, dass der Zug auf einer sanften Strecke fährt, wobei die erste automatische Fahr- und Energiesparsteuerstrategie die Geschwindigkeit des Zuges ansteuern soll, mittels einer Zugkraft bei maximaler Leistung von einer gegebenen Geschwindigkeit des Zuges an einem Anfangsabschnitt der Strecke auf eine erste Geschwindigkeit anzusteigen und über eine Leerlaufbedingung über die restliche Strecke die Geschwindigkeit des Zuges von der ersten Geschwindigkeit auf eine zweite Geschwindigkeit zu reduzieren sowie über eine Abbremsung die Geschwindigkeit des Zuges von der zweiten Geschwindigkeit auf null zu reduzieren, wobei die erste Geschwindigkeit geringer als eine Geschwindigkeitsbegrenzungsschwelle ist und die vorgegebene Geschwindigkeit die Geschwindigkeit beim Wechseln des Zuges in den intelligenten Konstantgeschwindigkeitsmodus ist, und
Erzeugen einer zweiten automatischen Fahr und Energiesparsteuerstrategie, wenn die Streckeninformationen angeben, dass der Zug auf einer schwierigen Strecke fährt, wobei die schwierige Strecke die Strecke bergauf bzw. bergab umfasst, und im Falle, dass die schwierige Strecke eine Strecke bergauf umfasst, die zweite automatische Fahr- und Energiesparsteuerstrategie darin besteht, die Beschleunigung des Zuges mittels der Zugkraft bei maximaler Leistung innerhalb eines vorbestimmten Fahrwegs, bevor der Zug die Strecke bergauf beginnt, zu starten, und im Falle, dass die schwierige Strecke die Strecke bergab umfasst, die zweite automatische Fahr- und Energiesparsteuerstrategie darin besteht, die Geschwindigkeit des Zuges so anzusteuern, dass sie mittels der Leerlaufbedingung innerhalb eines vorbestimmten Fahrweges, bevor der Zug auf die Strecke bergab übergeht, fällt.

6. Vorrichtung nach Anspruch 5, wobei die Reduzierung der Geschwindigkeit des Zuges von der zweiten Geschwindigkeit auf null mittels Abbremsung in derRecheneinheit (320) umfasst:
Reduzierung der Geschwindigkeit des Zuges von der zweiten Geschwindigkeit auf null mittels elektrischer Abbremsung.

7. Vorrichtung nach Anspruch 5, wobei die Recheneinheit (320) ausgebildet ist:
zum Planen eines Geschwindigkeits-Zeitverlaufs des Zuges in Abhängigkeit von den Steuerinformationen,
zum Berechnen des Widerstands der sanften Strecke in Echtzeit zum Erhalten eines Berechnungsergebnisses bezüglich des Streckenwiderstands,
zum Berechnen einer Echtzeit-Ausgangsleistung in Abhängigkeit von dem Geschwindigkeits-Zeitverlauf und dem Berechnungsergebnis des Streckenwiderstands,
zum Durchführen einer entsprechenden Berechnung für Leistungseinheiten in Abhängigkeit von der Echtzeit-Ausgangsleistung zum Erhalten eines Berechnungsergebnisses der Leistungsentsprechung und
zum Beschaffen einer Leistungsschaltanweisung auf der Basis des Berechnungsergebnisses der Leistungsentsprechung, um die Leistungseinheiten anzusteuern, in Abhängigkeit von dem Berechnungsergebnis der Leistungsentsprechung ein- bzw. auszuschalten, wobei die Aktivierung bzw. Abschaltung der Leistungseinheiten es ermöglicht, dass die Geschwindigkeit des Zuges von der vorgegebenen Geschwindigkeit auf die erste Geschwindigkeit ansteigt.

8. Vorrichtung nach Anspruch 5, welche weiterhin umfasst:
eine erste Bestimmungseinheit, die zum Bestimmen, ob der Zug eine Bedingung zum Wechseln in den intelligenten Konstantgeschwindigkeitsmoduus erfüllt, ausgebildet ist, und
eine zweite Bestimmungseinheit, die zum Bestimmen, ob eine Anweisung zum Wechseln in den intelligenten Konstantgeschwindigkeitsmodus erhalten wird, wenn die Bedingungen zum Wechseln in den intelligenten Konstantgeschwindigkeitsmodus erfüllt wird, ausgebildet ist, wobei das Beschaffen der Steuerinformationen bezüglich des Zuges in der Beschaffungseinheit erfolgt, wenn die Anweisung zum Wechseln in den intelligenten Konstantgeschwindigkeitsmodus empfangen wird.

## Revendications

1. Procédé permettant de réaliser une conduite intelligente à vitesse constante et économe en énergie, le procédé étant appliqué à une unité de commande centrale, et comprenant :
l'obtention d'informations de commande d'un train quand le train passe dans un mode intelligent à vitesse constante (S101), les informations de commande comprenant des informations d'itinéraire et des informations de train ; et
la génération d'une stratégie de commande de conduite automatique et d'économie d'énergie en fonction des informations de commande tout en respectant un temps de parcours de fonctionnement normal du train, et la commande du fonctionnement du train en fonction de la stratégie de commande de conduite automatique et d'économie d'énergie (S102), et le procédé étant **caractérisé en ce que**
la génération d'une stratégie de commande de conduite automatique et d'économie d'énergie en fonction des informations de commande tout en respectant un temps de parcours de fonctionnement normal du train comprend :
la génération d'une première stratégie de commande de conduite automatique et d'économie d'énergie si les informations d'itinéraire indiquent que le train circule sur un itinéraire simple, la première stratégie de commande de conduite automatique et d'économie d'énergie étant de commander une vitesse du train de façon qu'elle augmente d'une vitesse donnée à une première vitesse en utilisant une puissance maximale de traction sur une partie de démarrage de l'itinéraire et de façon que la vitesse du train diminue de la première vitesse à une seconde vitesse au moyen d'un état de marche à vide sur le reste de l'itinéraire, et de diminuer la vitesse du train de la seconde vitesse à zéro par décélération de freinage, la première vitesse étant inférieure à un seuil limite de vitesse et la vitesse donnée étant une vitesse à laquelle le train passe en mode intelligent à vitesse constante ; et
la génération d'une seconde stratégie de commande de conduite automatique et d'économie d'énergie si les informations d'itinéraire indiquent que le train circule sur un itinéraire complexe, l'itinéraire complexe comprenant une montée et/ou une descente et, dans le cas où l'itinéraire complexe comprend la montée, la seconde stratégie de commande de conduite automatique et d'économie d'énergie étant de commencer à faire accélérer le train en utilisant la puissance maximale de traction dans une distance préréglée avant que le train ne s'engage dans la montée ; et, dans un cas où l'itinéraire complexe comprend la descente, la seconde stratégie de commande de conduite automatique et d'économie d'énergie étant de commander la vitesse du train de façon qu'elle diminue en utilisant l'état de marche à vide dans une distance préréglée avant que le train ne s'engage dans la descente.

2. Procédé selon la revendication 1, dans lequel la réduction de la vitesse du train de la seconde vitesse à zéro par décélération de freinage comprend :
la réduction de la vitesse du train de la seconde vitesse à zéro au moyen d'un freinage électrique.

3. Procédé selon la revendication 1, dans lequel la commande de la vitesse du train de façon qu'elle augmente d'une vitesse donnée à une première vitesse en utilisant une puissance maximale de traction sur une partie de démarrage de l'itinéraire comprend :
la planification d'une courbe vitesse-temps du train en fonction des informations de commande ;
le calcul de la résistance de l'itinéraire simple en temps réel afin d'obtenir un résultat de calcul de la résistance de l'itinéraire ;
le calcul d'une puissance de sortie en temps réel en fonction de la courbe vitesse-temps et du résultat de calcul de la résistance d'itinéraire ;
la réalisation d'un calcul de correspondance pour des unités motrices en fonction de la puissance de sortie en temps réel pour obtenir un résultat de calcul de correspondance de puissance ; et
l'obtention d'une instruction de commutation de puissance en fonction du résultat de calcul de la correspondance de puissance pour commander les unités motrices afin qu'elles soient mises en marche ou désactivées en fonction du résultat de calcul de correspondance de puissance, l'activation ou l'arrêt des unités motrices permettant à la vitesse du train d'augmenter de la vitesse donnée à la première vitesse.

4. Procédé selon la revendication 1, comprenant en outre :
la détermination si le train remplit une condition pour passer en mode intelligent à vitesse constante ;
la détermination si une instruction de passage en mode intelligent à vitesse constante est reçue si la condition pour passer en mode intelligent à vitesse constante est remplie ; et
la réalisation de l'obtention d'informations de commande du train si l'instruction de passage en mode intelligent à vitesse constante est reçue.

5. Dispositif permettant de réaliser une conduite intelligente à vitesse constante et économe en énergie, le dispositif étant appliqué à une unité de commande centrale, et comprenant :
une unité d'obtention (310), conçue pour obtenir des informations de commande d'un train quand le train passe dans un mode intelligent à vitesse constante, les informations de commande comprenant des informations d'itinéraire et des informations de train ; et
une unité de traitement (320), conçue pour générer une stratégie de commande de conduite automatique et d'économie d'énergie en fonction des informations de commande sur la base du respect d'un temps de parcours de fonctionnement normal du train, et pour commander le fonctionnement du train en fonction de la stratégie de commande de conduite automatique et d'économie d'énergie, et le dispositif étant **caractérisé en ce que** l'unité de traitement (320) est conçue pour :
générer une première stratégie de commande de conduite automatique et d'économie d'énergie si les informations d'itinéraire indiquent que le train circule sur un itinéraire simple, la première stratégie de commande de conduite automatique et d'économie d'énergie étant de commander une vitesse du train de façon qu'elle augmente d'une vitesse donnée à une première vitesse en utilisant une puissance maximale de traction sur une partie de démarrage de l'itinéraire et de façon que la vitesse du train diminue de la première vitesse à une seconde vitesse au moyen d'un état de marche à vide sur le reste de l'itinéraire, et de réduire la vitesse du train de la seconde vitesse à zéro par décélération de freinage, la première vitesse étant inférieure à un seuil limite de vitesse et la vitesse donnée étant une vitesse à laquelle le train passe en mode intelligent à vitesse constante ; et
générer une seconde stratégie de commande de conduite automatique et d'économie d'énergie si les informations d'itinéraire indiquent que le train circule sur un itinéraire complexe, l'itinéraire complexe comprenant une montée et/ou une descente et, dans le cas où l'itinéraire complexe comprend la montée, la seconde stratégie de commande de conduite automatique et d'économie d'énergie étant de commencer à faire accélérer le train en utilisant la puissance maximale de traction dans une distance préréglée avant que le train ne s'engage dans la montée ; et, dans un cas où l'itinéraire complexe comprend la descente, la seconde stratégie de commande de conduite automatique et d'économie d'énergie étant de commander la vitesse du train de façon qu'elle diminue en utilisant l'état de marche à vide dans une distance préréglée avant que le train ne s'engage dans la descente.

6. Dispositif selon la revendication 5, dans lequel la réduction de la vitesse du train de la seconde vitesse à zéro par décélération de freinage dans l'unité de traitement (320) comprend :
la réduction de la vitesse du train de la seconde vitesse à zéro au moyen d'un freinage électrique.

7. Dispositif selon la revendication 5, dans lequel l'unité de traitement (320) est conçue pour :
planifier une courbe vitesse-temps du train en fonction des informations de commande ;
calculer la résistance de l'itinéraire simple en temps réel afin d'obtenir un résultat de calcul de la résistance de l'itinéraire ;
calculer une puissance de sortie en temps réel en fonction de la courbe vitesse-temps et du résultat de calcul de la résistance d'itinéraire ;
réaliser un calcul de correspondance pour des unités motrices en fonction de la puissance de sortie en temps réel pour obtenir un résultat de calcul de correspondance de puissance ; et
obtenir une instruction de commutation de puissance en fonction du résultat de calcul de la correspondance de puissance pour commander les unités motrices afin qu'elles soient mises en marche ou désactivées en fonction du résultat de calcul de correspondance de puissance, l'activation ou l'arrêt des unités motrices permettant à la vitesse du train d'augmenter de la vitesse donnée à la première vitesse.

8. Dispositif selon la revendication 5, comprenant en outre :
une première unité de détermination, conçue pour déterminer si le train remplit une condition pour passer en mode intelligent à vitesse constante ; et
une seconde unité de détermination, conçue pour déterminer si une instruction de passage en mode intelligent à vitesse constante est reçue si la condition pour passer en mode intelligent à vitesse constante est remplie, l'obtention des informations de commande du train dans l'unité d'obtention (310) étant effectuée si l'instruction de passage en mode intelligent à vitesse constante est reçue.
